# EUROPÄISCHE PATENTSCHRIFT

(11) **EP 1 653 579 B1**
(45) Veröffentlichungstag und Bekanntmachung des Hinweises auf die Patenterteilung: **21.11.2012**
(21) Anmeldenummer: 04029958.8
(22) Anmeldetag: 17.12.2004
(51) Int. Cl.: H02B 1/01

(54) **Profilschiene zum Aufbau eines Rahmengestells, insbesondere für einen Schaltschrank**
Profiled rail for constructing a frame, particulary for an electrical cabinet
Rail profilé pour construire un chassis, en particulier pour une armoire électrique

(30) Priorität: 02.11.2004 DE 202004016849 U
(43) Veröffentlichungstag der Anmeldung: 03.05.2006
(73) Patentinhaber: apra-gerätebau Dipl.-Ing.(FH) Wolgang Appenzeller und Wilfried Rademacher GmbH & Co.KG, 54550 Daun/Vulkaneifel (DE)
(72) Erfinder: Weber, Michael, 54518 Dodenburg (DE)
(74) Vertreter: Boecker, Joachim

(56) Entgegenhaltungen:
- WO-A-03/105552
- DE-U1- 9 218 609
- US-A1- 2003 048 048
- US-B1- 6 231 142

## Beschreibung

Die Erfindung betrifft eine Profilschiene zum Aufbau eines Rahmengestells für einen Schrank, insbesondere für einen Schaltschrank, gemäß dem Oberbegriff des Anspruches 1.

Schaltschränke sind häufig in standardisierter sogenannter 19-Zoll-Befestigungstechnik aufgebaut. Sie dienen zur Aufnahme von Geräten und Komponenten der Elektrotechnik, wie beispielsweise Komponenten der Datenverarbeitung und der Regelungs- und Steuerungstechnik. In den Schaltschränken sind Befestigungsschienen mit Befestigungslochreihen entsprechend der 19 Zoll-Befestigungstechnik vorhanden. In die Schaltschränke können auch Einschübe oder Module übereinander eingebaut werden, die mit aktiven und/oder passiven elektrischen Komponten bestückt sind.

Das Rahmengestell besteht im wesentlichen aus einem oberen und einem unteren quadratisch oder rechteckig Endrahmen, die in ihren Eckbereichen durch vier Profilschienen miteinander verbunden sind.

Aus diesem Rahmengestell wird ein Schrank, inden die Seitenöffnungen des Rahmengestells durch Wandelemente und/oder Türen verkleidet werden und die Öffnungen der Endrahmen durch eine Dachplatte beziehungsweise eine Bodenplatte verkleidet werden.

Die Türen sind mit Scharnieren versehen, die um eine vertikale Achse schwenkbar sind. Die Scharniere werden dabei in bestimmten Positionen an der Profilschiene des Rahmengestells mittels Schrauben befestigt. Zu diesem Zweck sind in den Profilschienen Löcher an entsprechenden Positionen vorgesehen. Werden zusätzliche Löcher zur ortsvariablen Befestigung der Scharniere vorgesehen, so besteht die Gefahr, daß durch die nichtbelegten Löcher Schmutz und Feuchtigkeit in das Innere des Schrankes gelangen kann.

Um dies zu verhindern wird entweder darauf verzichtet, in den beispielsweise aus kaltgewalztem Stahblech bestehenden Profilstangen zusätzliche Löcher, zum Beispiel eine ganze Lochreihe, vorzusehen, oder die nicht belegten Löcher werden durch geeignete Maßnahmen, wie zum Beispiel durch Kunststoffstopfen, nachträglich verschlossen, was einen erheblichen Mehraufwand erfordert. Ist von vornherein nur die erforderliche Anzahl von Löchern für die Scharnierbefestigung vorgesehen, so müssen, falls zum Beispiel eine verkürzte Tür verwendet werden soll, weitere Löcher nachträglich in die Profilschiene gebohrt werden, was ebenfalls einen zusätzlichen Aufwand darstellt.

Aus der US 6 231 142 B1 ist eine Profilschiene bekannt, die aus einem rohrförmigen Hohlprofil mittels eines Walzbiegeprozesses hergestellt wird. Die Profilschiene ist in ihrem Querschnitt durch Abbiegungen und Aufeinanderfalten von Wandabschnitten, in denen sich Befestigungslöcher befinden, so gestaltet, dass ihr Querschnitt eine Trennwand aufweist, die ein Eindringen von verunreinigungen durch nichtbelegte schrankäußere Befestigungslöcher in das Innere des Schrankes verhindern soll. Diese Konstruktion mit aufeinander gefalteten Wandabschnitten kann nicht verhindern, dass durch die in diesen Wandabschnitten befindlichen nicht belegete Befestigungslöcher über Luftbrücken (Verbindungswege) zwischen den nur aufeinander liegenden gefalteten Blechabschnitte Feinstaubpartikel dennoch in das Innere des Schrankes eindringen können.

Aus der WO 03/105552 A ist eine Profilschiene bekannt, die aus einem Blech durch Abbiegungen und Aufeinanderfalten von Blechabschnitten hergestellt wird, wobei im Querschnitt der Profilschiene ebenfalls eine Trennwand zwischen der schrank-äußeren Seite und der schrank-inneren Seite der Profilschiene gebildet wird. In den schrank-äußeren Befestigungsflanschen sind statt Befestigungslöcher nur Kerben zur Befestigung äußerer Bauteile (zum Beispiel Wandteile oder Türen) vorgesehen. Auch bei dieser Profilschiene kann durch äußere und innere Befestigungslöcher und Luftbrücken zwischen aufeinander gefalteten Blechabschnitten Feinstaub in das Innere des Schrankes eindringen.

Eine weitere Konstruktion einer aus einem Blech durch Abbiegungen und Aufeinanderfaltungen hergestellte Profilschiene ist aus der US 2003/048048 A1 bekannt. Auch hier sind die Faltungen und die Befestigungslöcher so angeordnet, dass durch Befestigungslöcher und aufeinander gefaltete Blechabschnitte Feinstaub in das Innere des Schrankes eindringen kann. Bei dieser Konstruktion bildet sich keine im Querschnitt geschlossene Säule in der Profilschiene, so dass die Stabilität gegenüber den beiden vorgenannten bekannten Profilschienen weniger stark ist.

Aus der DE 92 18 609 U1 ist eine dreieckförmige durch Abwinklungen eines Bleches gewonnene Profilschiene bekannt, bei der die beiden freien seitlichen Enden (Kanten) des Bleches über eine Schweißnaht miteinander verbunden sind. Durch Einkerbungen an der Innenseite des Bleches an den Knickstellen sollen beim Abbiegen Spannungen vermieden werden, deren Vorhandensein zu einer Verwölbung und Verzerrung der Wandflächen der Profilschienen führen würde.

Der vorliegenden Erfindung liegt die Aufgabe zugrunde, eine Profilschiene gemäß dem Oberbegriff des Anspruches 1 zu entwickeln, die in ihrem Querschnitt eine Trennwand zwischen den schrank-äußeren Löchern und den schrank-inneren Befestigungslöchern aufweist, die so beschaffen ist, dass auch feinste Stäube über nicht belegte offene Befestigungslöcher oder Flüssigkeiten nicht in das Innere eines aus den Profilschienen aufgebauten Schrankes eindringen können.

Zur Lösung dieser Aufgabe wird eine Profilschiene gemäß dem Oberbegriff des Anspruches 1 vorgeschlagen, welche erfin-dungsgemäß die im kennzeichnenden Teil des Anspruches 1 genannten Merkmale hat.

Weitere Ausgestaltungen der Erfindung sind in den Unteransprüchen genannt.

Indem zwei Abschnitte des Bleches durch eine Längsnaht in Richtung der Profilschiene miteinander verschweißt werden, von welcher Längsnaht sich dann die Außenflansche erstrecken, wird eine absolut dichte Abschirmung zwischen der schrank-äußeren und der schrank-inneren Seite der Profilschiene erreicht.

Anhand des in den Figuren gezeigten Ausführungsbeispiels soll die Erfindung näher erläutert werden.
- Figur 1: zeigt in perspektivischer Darstellung ein mit Hilfe von Profilschienen gemäß der Erfindung aufgebautes Rahmengestell für einen Schaltschrank,
- Figur 2: zeigt in perspektivischer Darstellung und in vergrößertem Maßstab einen Abschnitt einer der in Figur 1 verwendeten Profilschienen gemäß der Erfindung,
- Figur 3: zeigt die Profilschiene der Figur 2 im Querschnitt mit zwei an der Profilschiene über Scharniere befestigten Türen.

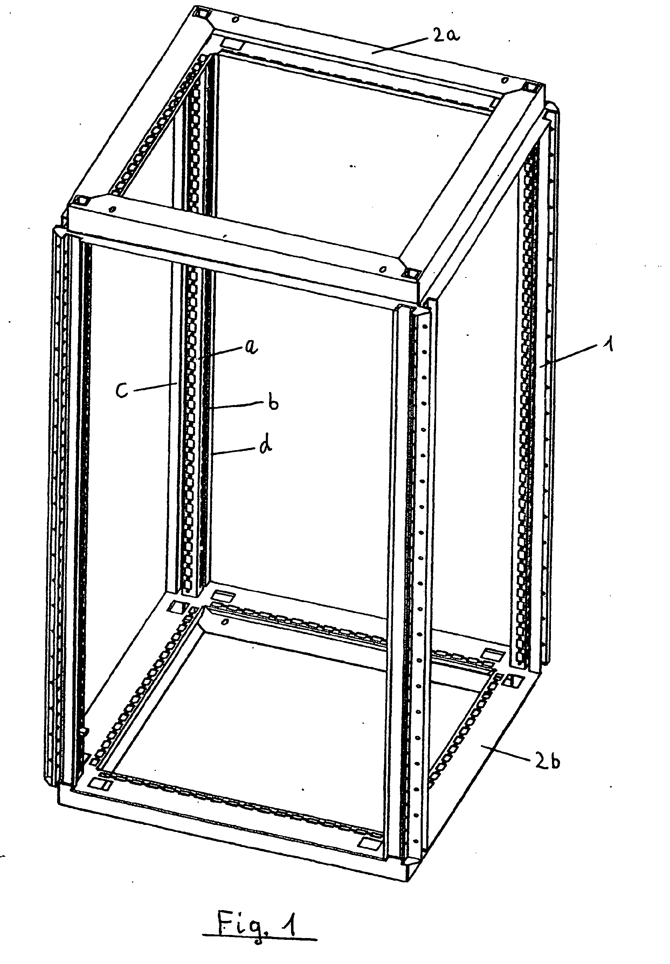

Das Rahmengestell für einen Schaltschrank in Figur 1 besteht aus vier erfindungsgemäßen Profilschienen 1, einem oberen geschlossenen Endrahmen 2a und einem unteren geschlossenen Endrahmen 2b. Die beiden Endrahmen 2a und 2b sind über ihre Eckbereiche durch die Profilschienen 1 miteinander verbunden.

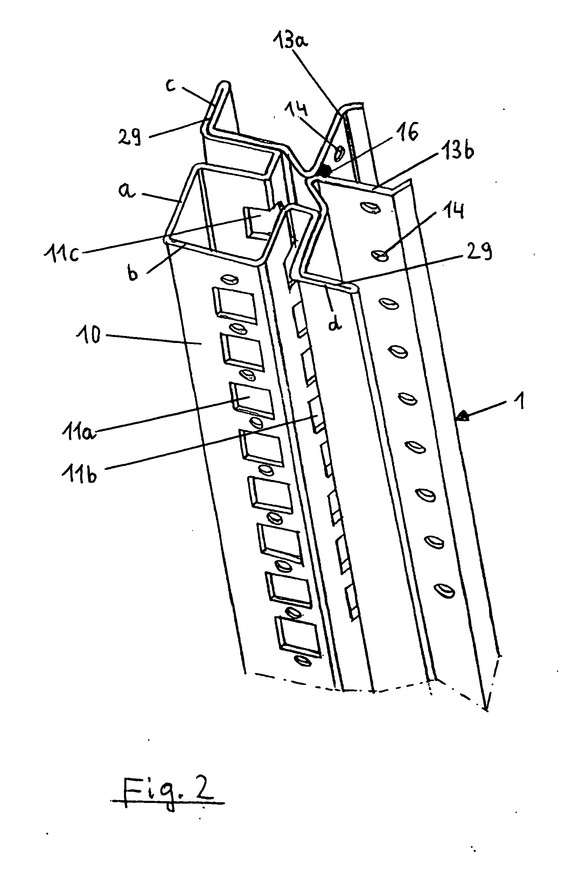

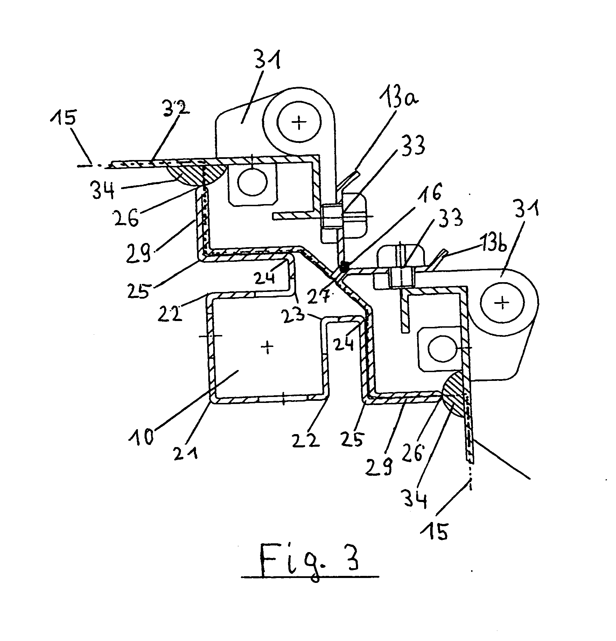

Die Figuren 2 und 3 zeigen den Aufbau der beispielhaften Profilschiene 1 gemäß der Erfindung genauer. Entsprechende Seitenabschnitte der Profilschiene sind in Figur 1 und Figur 2 mit a bis d bezeichnet.

Die Profilschiene ist aus einem Blech aus vorzugsweise kaltgewalztem Stahl hergestellt, welches in Längsrichtung der Profilschiene mehrfach abgewinkelt beziehungsweise gefaltet ist. Zur Herstellung einer dichtenden Trennwand 15 (gestrichelt in Figur 3) zwischen der späteren Schrankaußenseite und Schrankinnenseite ist das Blech längs zweier sich ganz oder beinahe berührender Linien in Längsrichtung der Profilschiene mit einer verbindenden und dichtenden Schweißnaht 16 versehen ist, die sich über ganze Länge der Profilschiene erstreckt. Zu der Trennwand 15 gehören zwei Seitenflansche 29. Die Profilschiene weist auf der Schrankinnenseite eine vorzugsweise annähernd quadratische Säule 10 auf, die mit Lochreihen 11a bis 11c versehen ist, die zur Befestigung von Einbauteilen dienen. Auf der Außenseite der Trennwand 15 sind zwei Außenflansche 13a, 13b vorhanden, die mit Lochreihen 14 zur Befestigung von Türscharnieren 21 dienen.

Der Verlauf der Abwinkelungen beziehungsweise Faltungen des Blech kann im einzelnen beispielsweise wie folgt beschaffen sein: Ausgehend von der in der Mitte des Bleches liegenden Längslinie 21 (Figur 3), ist das Blech zunächst rechtwinklig abgebogen. Dann ist das Blech um die beiden Längslinien 22 rechtwinklig abgebogen. Nach Bildung einer fast geschlossenen quadratischen Säule 10 sind die beiden freien seitlichen Enden des Bleches durch Abbiegungen um die Längslinien 23, 24, 25 zu je einem rechtwinkligen Seitenflansch 29 abgebogen. An den Enden 26 der Seitenflansche 29 sind die freien seitlichen Enden des Bleches um 180° abgefaltet und verlaufen in Anlage an den Seitenflansch 29 zurück zur Mitte des Profils, wo sie im Punkte 27 aufeinanderstoßen. Im Punkte 27 sind beide Blechenden rechtwinklig nach außen abgebogen und verlaufen eine kurze Strecke 28 unter Anlage aneinander oder dicht parallel zueinander, worauf sie um je 45° in unterschiedlicher Richtung abgebogen sind und je einen Außenflansch 13a, 13b für die Befestigung von Türscharnieren 31 bilden. Dort wo die beiden Blechenden ganz oder fast aneinander liegend verlaufen (Abschnitt 28), sind sie mit einer sich über die gesamte Länge der Profilschiene erstreckenden dichten Schweißnaht 16 miteinander verbunden.

In Figur 3 ist an jeden Außenflansch 13a, 13b eine Tür 32 über ein Scharnier 31 mittels einer Schraubbefestigung 33 befestigt.

Die Seitenflansche 29 sind bei dem gezeigten Ausführungsbeispiel der Figur 3 so bemessen, daß sie bei geschlossener Tür 32 gegen ein am Türblatt befestigtes Dichtungselement 34 unter geeignetem Dichtungsdruck anliegen.

Das in den Figuren 2 und 3 gezeigte Ausführungsbeispiel der Profilschiene ist symmetrisch zu einer Linie durch die Punkte 27 und 21 aufgebaut. Natürlich ist die Erfindung nicht auf einen symmetrischen Aufbau, wie ihn die Figuren 2 und 3 zeigen, beschränkt. Es ist beispielsweise auch denkbar, daß nur ein Außenflansch 13a oder 13b vorhanden ist. Ebensowenig muß die Säule 10 quadratisch sein. Sie kann auch rechteckförmig sein oder eine andere Querschnittsform aufweisen. Entscheidend ist, daß über die Seitenflansche 29 und den zentralen Teil der Profilschiene mit der Schweißnaht 16 eine in Figur 3 gestrichelte angedeutete Trennwand 15 durch die Profilschiene läuft, welche die schrank-inneren Teile und die Außenflansche 13a, 13b zur Befestigung der Scharniere dichtend voneinander trennt. Figur 3 läst erkennen, wie sich diese Trennwand 15 über die Dichtungselemente 34 und die Türen 32 um den gesamten Schrank herum fortsetzt.

## Patentansprüche

1. Profilschiene (1) zum Aufbau eines Rahmengestells für einen Schrank, insbesondere für einen Schaltschrank, welche Profilschiene sowohl mit schrank-inneren Löchern oder Lochreihen (11a-11c) zur Befestigung von Einbauteilen oder zur Durchführung von Kabeln versehen ist als auch mit schrank-äußeren Löchern oder Lochreihen (14) zur variablen Befestigung von Türscharnieren (31) versehen ist, wobei
a) die Profilschiene aus einem mehrfach in Längsrichtung der Profilschiene abgewinkelten beziehungsweise gefalteten Blech besteht,
b) die Profilschiene (1) über ihre gesamte Länge und ihren gesamten Querschnitt eine Trennwand (15) aufweist, welche ein Eindringen von Verunreinigungen durch nicht belegte schrankäußere Löcher (14) in das Innere des Schrankes verhindert,
c) die Profilschiene auf der schrank-inneren Seite der Trennwand (15) eine Säule (10) mit schrankinneren Löchern oder Lochreihen (11a-11c) aufweist,
d) die Profilschiene auf der schrank-äußeren Seite der Trennwand (15) mindestens einen Außenflansch (13a,13b) mit Löchern oder einer Lochreihe (14) aufweist, **dadurch gekennzeichnet,**
e) **daß** zur Herstellung der dichtenden Trennwand (15) das Blech längs zweier sich ganz oder fast berührender Linien in Längsrichtung der Profilschiene über ihre gesamte Länge mit einer verbindenden und dichtenden Schweißnaht (16) versehen ist,
f) und **daß** der mindestens eine Außenflansch (13a,13b) von der genannten Schweißnaht (16) ausgehend von einem freien seitliche Ende des Bleches gebildet wird.

2. Profilschiene nach Anspruch 1, **dadurch gekennzeichne**t, daß das Blech, von einer inneren Längslinie (21) ausgehend, zunächst zu der genannten vorzugsweise quadratischen oder rechteckigen, annähernd geschlossenen Säule (10) gebogen ist, daß die beiden freien seitlichen Enden des Bleches dann zu je einem vorzugsweise rechtwinkligen Seitenflansch (29) gebogen sind, an dessen Enden (26) die beiden freien seitlichen Enden des Bleches um 180 Grad abgefaltet sind und längs der Seitenflansche (29) wieder aufeinander zulaufen und an einer Stelle (28), an der sie zusammentreffen, miteinder verschweißt sind, und daß mindestens ein freies seitliche Ende des Bleches von der Schweißnaht (16) aus nach außen zu einem Außenflansch (13a,13b) mit schrank-äußeren Löchern oder Lochreihen (14) gebogen ist.

3. Profilschiene nach Anspruch 2, **dadurch gekennzeichnet, daß** die genannte inneren Längslinie (21) des Bleches die Mitte des Bleches ist und der Querschnitt der Profilschiene zu einer Linie, die durch die Längslinie (21) des Bleches und die Schweißnaht (16) verläuft, symmetrisch ist.

4. Profilschiene nach einem der vorhergehenden Ansprüche,
**dadurch gekennzeichnet, daß** sie aus kaltgewalztem Stahlblech besteht.

5. Aus Profilschienen nach einem der vorhergehenden Ansprüche aufgebauter Schrank, insbesondere ein Schaltschrank,
**dadurch gekennzeichnet, daß** die mindestens eine Tür (32) des Schrankes dort, wo ein Seitenflansche (29) der Trennwand (15) auf die Tür zuläuft, mit einem Dichtungselement (34) versehen ist, welches bei geschlossener Tür (32) dichtend am Ende (26) des Seitenflansches (29) anliegt.

## Claims

1. Profiled rail (1) for constructing a frame for a cabinet, particularly for a switch cabinet, which profiled rail is provided with inner cabinet holes or rows of holes (11a-11c) for the mounting built-in items or for the leading through of cables, as well as outer cabinet holes or rows of holes (14) for the mounting of variable door hinges (31), whereby
a) said profiled rail is built up of a metal sheet which is repeatedly bent or folded respectively along the longitudinal direction of the rail profile,
b) said profiled rail (1) exhibits a partition (15) along its entire length and its entire cross-section which partition prevents the penetration of pollutants into the inner of the cabinet through unoccupied holes on the outside of the cabinet,
c) said profiled rail forms on the cabinet-inwardly facing side of the partition (15) a column (10) provided with inner cabinet holes or rows of holes (11a-11c),
d) said profiled rail is provided on the cabinet-outwardly facing side of the partition (15) with at least one outer flange (13a,13b) with holes or rows of holes (14), c h a r a c t e r i z e d in
e) that for establishing said sealing partition (15) the metal sheet is provided with a connecting and sealing weld seam (16) along two lines contacting each other completely or nearly in the longitudinal direction along the entire length of profiled rail,
f) and that said at least one outer flange (13a,13b) is formed by a free lateral end of the metal sheet starting from said weld seam (16).

2. Profiled rail according to claim 1, **characterized in that** said metal sheet, starting from an inner longitudinal line (21), is at first bent towards said preferably square or rectangular almost closed column (10), that the two free lateral ends of the metal sheet are then each bent into a preferably rectangular lateral flange (29) at the ends (26) of which the two free lateral ends of the metal sheet are folded by 180° approaching each other along the lateral flanges (29) and are welded together in a place (28) where they contact each other, and that at least one free lateral end of the metal sheet is bent into an outer flange with outer cabinet holes or rows of holes (14) starting outwards from said weld seam (16).

3. Profiled rail according to claim 2, **characterized in that** said inner longitudinal line (21) of the metal sheet is the middle of the metal sheet and that the cross-section of the profiled rail is symmetrical with respect to a line which extends through the longitudinal line (21) of the metal sheet and the weld seam (16).

4. Profiled rail according to any of the preceding claims,
**characterized in that** it consists of cold-rolled steel sheet.

5. Cabinet assembled of profiled rails according to any of the preceding claims, particularly a switch cabinet, c h a-r a c t e r i z e d in that said at least one door (32) of the cabinet is provided in a position where a lateral flange (29) of the partition (15) extends towards the door with a sealing element (34) which abuts sealingly against the end (26) of said lateral flange (29).

## Revendications

1. Rail (1) profilé de construction d'un châssis d'une armoire, notamment d'une armoire électrique, lequel rail profilé est pourvu à la fois de trous ou de rangées (11a à 11c) de trous intérieurs à l'armoire, pour la fixation de parties à monter ou pour le passage de câbles, et de trous ou de rangées (14) extérieurs à l'armoire, pour la fixation variable de charnières (31) de porte, dans laquelle
a) le rail profilé est constitué d'une tôle coudée ou pliée plusieurs fois dans la direction longitudinale du rail profilé,
b) le rail (1) profilé a, sur toute sa longueur et toute sa section transversale, une cloison (15), qui empêche une pénétration d'impuretés à l'intérieur de l'armoire par des trous (14) extérieurs à l'armoire qui sont inoccupés,
c) le rail profilé a, du côté intérieur à l'armoire de la cloison (15), une colonne (10) ayant des trous ou des rangées (11a à 11c) de trous intérieurs à l'armoire,
d) le rail profilé a, du côté extérieur à l'armoire de la cloison (15), au moins une aile (13a, 13b) extérieure ayant des trous ou une rangée (14) de trous,
**caractérisé**
e) **en ce que**, pour la fabrication de la cloison (15) étanche, la tôle est pourvue, le long de deux lignes se touchant complètement ou se touchant presque dans la direction longitudinale du rail profilé sur toute sa longueur, d'un cordon (16) de soudure de liaison et d'étanchéité,
f) et **en ce que** la au moins une aile (13a, 13b) extérieure est formée en partant d'une extrémité latérale libre de la tôle par ledit cordon (16) de soudure.

2. Rail profilé suivant la revendication 1, **caractérisé en ce que** la tôle est, en partant d'une ligne (21) longitudinale intérieure, d'abord coudée vers ladite colonne (10) à peu près fermée, de préférence carrée ou rectangulaire, **en ce que** les deux extrémités latérales libres de la tôle sont ensuite coudées en respectivement une aile (29) latérale, de préférence à angle droit, aux extrémités (26) de laquelle les deux extrémités latérales libres de la tôle sont pliées à 180° et reviennent l'une sur l'autre le long des ailes (29) latérales et sont soudées entre elles en un point où elles se rencontrent et **en ce qu'**au moins une extrémité latérale libre de la tôle est, à partir du cordon (16) de soudure, coudée vers l'extérieur en une aile (13a, 13b) extérieure ayant des trous ou des rangées (14) de trous extérieurs à l'armoire.

3. Rail profilé suivant la revendication 2, **caractérisé en ce que** ladite ligne (1) longitudinale intérieure de la tôle est le milieu de la tôle et la section transversale du rail profilé est symétrique par rapport à une ligne, qui passe par la ligne (21) longitudinale de la tôle et par le cordon (16) de soudure.

4. Rail profilé suivant l'une des revendications précédentes, **caractérisé en ce qu'**il est constitué en une tôle d'acier laminé à froid.

5. Armoire, notamment armoire électrique, constituée de rails profilés suivant l'une des revendications précédentes, **caractérisée en ce que** la au moins une porte (32) de l'armoire est pourvue, là où une aile (29) latérale de la cloison (15) arrive à la porte, d'un élément (34) d'étanchéité, qui, lorsque la porte (32) est fermée, s'applique de manière étanche à l'extrémité (26) de l'aile (29) latérale.
